Europäisches Patentamt

European Patent Office

Office européen des brevets

(19)

(11) Veröffentlichungsnummer : **0 080 114 B2**

(12) **NEUE EUROPÄISCHE PATENTSCHRIFT**

(45) Veröffentlichungstag der neuen Patentschrift :
03.04.91 Patentblatt 91/14

(51) Int. Cl.$^5$ : **G08B 13/18**

(21) Anmeldenummer : **82110390.0**

(22) Anmeldetag : **11.11.82**

(54) Strahlungsdetektor mit mehreren Sensorelementen.

(30) Priorität : **25.11.81 CH 7527/81**

(43) Veröffentlichungstag der Anmeldung :
**01.06.83 Patentblatt 83/22**

(45) Bekanntmachung des Hinweises auf die
Patenterteilung :
**28.08.85 Patentblatt 85/35**

(45) Bekanntmachung des Hinweises auf die
Entscheidung über den Einspruch :
**03.04.91 Patentblatt 91/14**

(84) Benannte Vertragsstaaten :
**DE GB**

(56) Entgegenhaltungen :
DE-A- 2 526 171
DE-B- 2 537 380
GB-A- 2 047 886
US-A- 3 309 689
US-A- 3 863 239

(73) Patentinhaber : **Eltec Instruments AG**
**Neugutstrasse 4**
**CH-8304 Wallisellen (CH)**

(72) Erfinder : **Keller, Christiane**
**Allenbergstrasse 59**
**CH-8708 Männedorf (CH)**

EP 0 080 114 B2

## Beschreibung

Die Erfindung betrifft einen Strahlungsdetektor nach dem Oberbegriff des Patentanspruchs 1 mit mindestens einem Paar von Sensorelementen und einer Anordnung optischer Elemente, welche über den gesamten Raumwinkel betrachtet, mehrere Paare von Sichtfeldern zur Aufnahme von Strahlung durch die Sensorelemente bilden, wobei jeweils ein Sichtfeld, aus dem eines der Sensorelemente Strahlung empfängt, einem anderen Sichtfeld zugeordnet ist, aus welchem das andere Sensorelement Strahlung mittels des gleichen optischen Elementes empfängt, und wobei die Ausgangssignale der Sensorelemente so summiert werden, dass sie sich bei gleichmässiger Bestrahlung der Sensorelemente wenigstens angenähert aufheben.

Solche Strahlungsdetektoren dienen beispielsweise dazu, einen Raumbereich auf sich bewegende Objekte zu überwachen. Dabei kann es sich um Infrarotdetektoren handeln, die die langwellige Infrarotstrahlung (Wärmestrahlung) von Personen erfassen und die als Einbruchdetektoren Verwendung finden, oder die die Aenderung von Infrarotstrahlung durch ein sich bewegendes Objekt detektieren.

Dabei hat es sich als zweckmässig erwiesen die Empfindlichkeit des Strahlungsdetektors auf eine Anzahl engbegrenzter Raumwinkel oder Sichtfelder zu beschränken und die Bewegung des Objektes durch eines oder mehrere dieser Sichtfelder auszunützen, wobei die Sensorelemente ein Wechselsignal abgeben.

Es sind bereits eine Anzahl von Strahlungsdetektor-Anordnungen mit einer Vielzahl von strahlenförmigen Sichtfeldern bekannt geworden. Mit einer aus US-A-2 198 725 vorbekannten ind in Figur 1 dargestellten Anordnung werden mit einem einzigen Sensorelement mehrere streifenförmige Sichtfelder 2 mit Hilfe eines vor den Strahlungssensor 61 gesetzten Gitterrasters 3 erzeugt. Das Sensorelement 61 ist dabei in ein Schutzgehäuse 10 eingebaut, das für die einfallende Strahlung ein Fenster 70 aufweist und für das elektrische Ausgangssignal Anschlussdrähte 80.

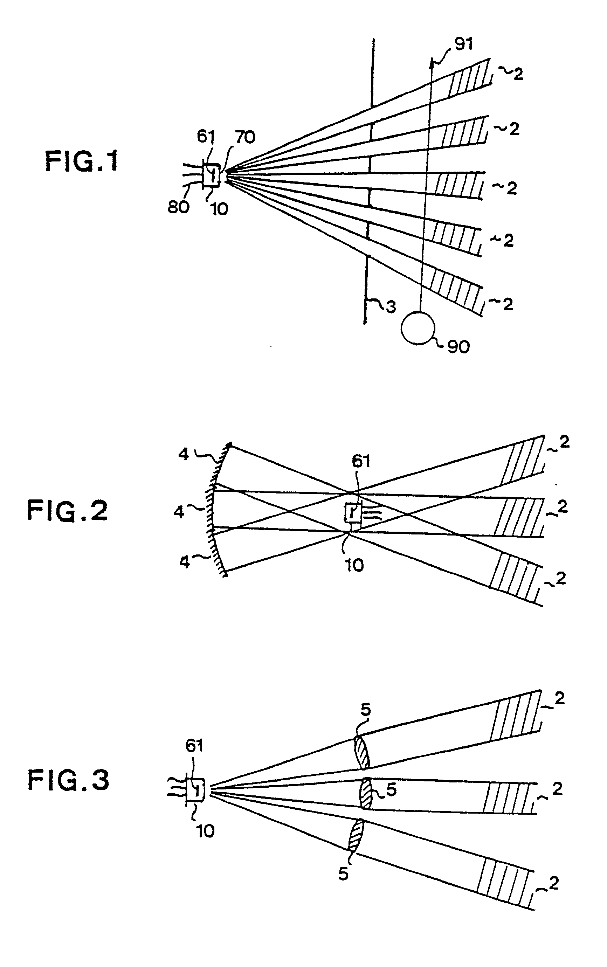

Auch lassen sich strahlenförmige Sichtfelder 2 mit Anordnungen erzeugen die eine Vielzahl von konkaven in die gewünschten Raumrichtungen ausgerichteten Segmentspiegeln 4 erzeugen wie z.B. in US-A-3 703 718 und 4 058 726 beschrieben und in Figur 2 dargestellt. Ebenso sind Anordnungen bekannt, wie in Figur 3 gezeigt, die eine Vielzahl von in entsprechende Raumrichtungen ausgerichteten Linsen, Fresnellinsen oder Objektiven 5 verwenden wobei jede Linse oder jedes Objektiv einem Sichtfeld 2 zugeordnet ist und wobei die einzelnen Linsen auch in Form einer einzigen Segmentlinse oder als Fresnel- Segmentlinse ausgeführt sein können Gegenüber der Anordnung nach Figur 1 haben die Anordnungen nach Figur 2 und 3 den Vorteil weniger divergenter Sichtfelder und daher grösserer Reichweite und sie haben daher eine gewisse praktische Anwendung gefunden.

Darüberhinaus sind Systeme bekannt geworden, z.B. aus CH-A-596 619, die verschiedene Kombinationen von planen, zylindrischen und asphärisch gewölbten Spiegeln oder Linsen verwenden. Alle diese Strahlungsdetektor-Anordnungen zielen jedoch darauf ab, mit nur einem Strahlungssensor eine Vielzahl von Sichtfeldern gleichzeitig zu überwachen. Meistens werden sie als Einbruchdetektoren oder Bewegungsmelder verwendet, und ihre Empfindlichkeit zur Erfassung von Personen oder anderen Objekten ist in der Praxis meist befriedigend, Hingegen sind solche Detektoren sehr empfindlich auf Störstrahlungen, wie z.B. Sonnenstrahlung, Scheinwerfer, Wärmeturbulenzen von Klimaanlagen oder von anderen Strahlungsquellen im spektralen Empfindlichkeitsbereich des Sensors, die direkt auf die empfindlichen Sichtfelder des Detektors einwirken. Für die Verwendung als Einbruchdetektoren in der Sicherheitstechnik weisen sie daher eine zu hohe Fehlalarmquote auf.

Dieses Problem versuchte man z.B. gemäss GB-A-2 047 886 durch Strahlungsdetektor- Anordnungen zu lösen, die zwei nahe beieinander liegende Sensorelemente verwenden, von denen eines ein positives und das andere ein negatives Signal liefert und deren beide Signale summiert werden. Solche als Twin-, Dual- oder als Differentialsensoren bezeichnete Sensoren werden gewöhnlich als antiparallele Sensoren, als entgegengestzt und in Serie geschaltete Sensoren ausgeführt oder als zwei Sensoren die auf einen Differentialverstärker arbeiten.

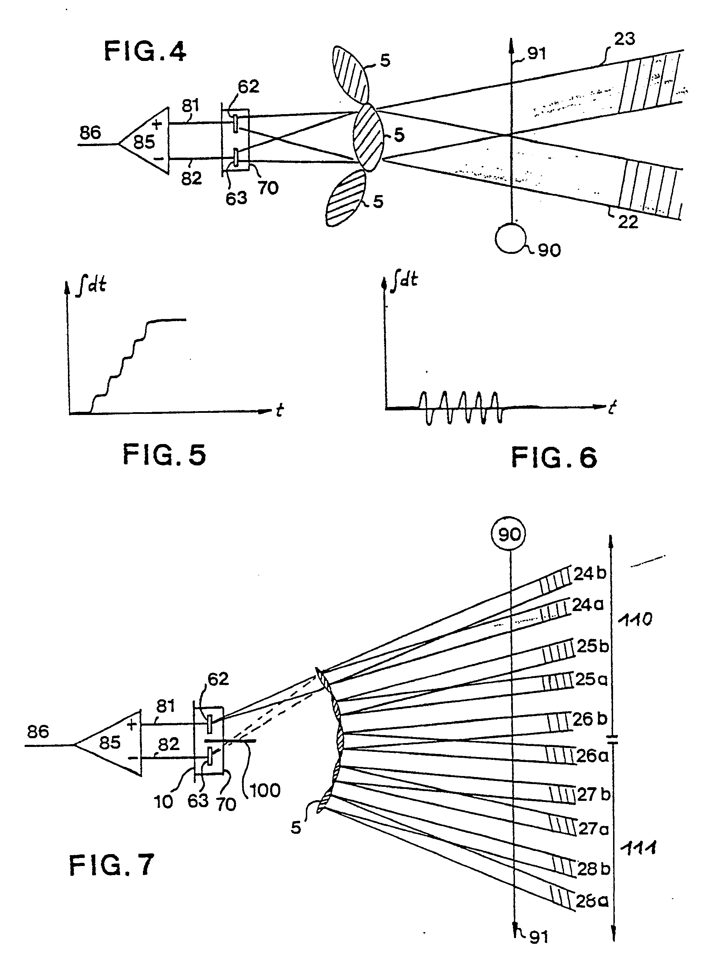

Figur 4 zeigt eine solche bekannte Strahlungsdetektor-Anordnung mit mehreren Linsen 5, jedoch mit zwei differentiell geschalteten, nahe beieinander liegenden Sensorelementen 62 und 63. Jedem Sensorelement ist dabei eine Schar Sichtfelder 22 bzw. 23 zugeordnet, wobei in der Figur der Uebersicht halber nur der Strahlengang durch eine Linse gezeigt ist. Die zwei Sensorelemente werden in der Praxis vielfach zusammen in einem einzigen Gehäuse 10 eingebaut, das ein Fenster 70 aufweist. In diesem Beispiel erfolgt die Differenzbildung durch einen Differentialverstärker 85, dessen Eingangssignal 81 mit positivem Vorzeichen und dessen Eingangssignal 82 mit negativem Vorzeichen summiert werden, wobei die Summe am Ausgang 86 erscheint. Durch diese Differenzbildung wird also kein Ausgangssignal erzeugt, wenn beide Sensorelemente zur gleichen Zeit mit der gleichen Strahlung beaufschlagt werden Dadurch. werden Störstrahlungen, die gleichmässig auf alle Sichtfelder einwirken oder auf das Blickfenster des Detektors einstrahlen, weitgehend, oder im Idealfall völlig symmetrischer Ausbildung der beiden Sensorelemente sogar vollständig unterdrückt. Da sich die beiden Sensorelemente räumlich etwas getrennt angeordnet befinden ergeben sich durch die genannten optischen Anordnungen zur Erzeugung einer Vielzahl von Sichtfeldern für die beiden Sensorelemente je eine Anzahl leicht verschobener Sichtfelder, d.h die beiden Sensorelemente haben nicht genau identische und sich nicht, oder nur teilweise überdeckende Sichtfelder. Dadurch ist eine erfolgreiche Detektion von sich bewegenden Personen in gewissen Bereichen möglich da sich diese normalerweise zuerst in ein Sichtfeld des einen und dann in ein Sichtfeld des anderen Sensors bewegen.

Zum Vergleich der Wirkungsweise von Strahlungsdetektoren mit nur einem und mit zwei differentiell geschalteten Sensorelementen zeigt Figur 5 das zeitliche integral der auf das Sensorelement einfallenden Strahlung, falls sich ein Objekt 90 auf einem Pfad 91 nacheinander durch die Sichtfelder einer Anordnung nach Figur 1 bewegt. Dieses zeitliche Integral ist insofern von Bedeutung, als vielfach in passiven Infrarotdetektoren, die die langwellige Eigenstrahlung von Objekten detektieren, sogenannte thermische Sensoren verwendet werden, die bei schnellen Strahlungsänderungen zeitlich integrierend wirken. Das Nachweisvermögen solcher Detektoren für sich schnell bewegende oder nahe vor dem Detektor befindliche Objekte, die zeitlich nur sehr kurze Strahlungsimpulse liefern ist daher durch den maximalen Wert des zeitlichen Integrals bestimmt Dabei liefert der Durchgang des Objektes durch jedes Sichtfeld einen positiven Beitrag zum Integral.

Figur 6 zeigt das zeitliche Integral für den Fall einer Anordnung mit zwei differentiell geschalteten Sensoren nach Figur 4 unter der Annahme, dass jedem Sensor fünf Sichtfelder zugeordnet sind. Dann liefert der Durchgang eines Objektes 90 auf dem Pfad 91 abwechselnd einen positiven und einen negativen Beitrag zu Integral. Das Integral erreicht daher nie einen nennenswerten Maximalwert, und die kleinen Momentanwerte können vielfach nicht von anderen Störeinflüssen, wie Rauschen unterschieden werden.

Obwohl also Differentialsysteme sehr hohe Zuverlässigkeiten bei Einfluss von Störstrahlung aufweisen, haben sie den Nachteil, dass sie im Nahbereich, d.h. direkt am Bildfenster und in der davor liegenden Zone, wo vom sich bewegenden Objekt meistens mehrere Sichtfelder gleichzeitig überdeckt werden, durch den erwähnten Summierungseffekt keine Empfindlichkeit aufweisen, oder dass das zeitlich integrierte Signal des summierten Ausgangssignals der Sensoren Null oder sehr klein wird. Für die Verwendung als Einbruchdetektoren oder Bewegungsmelder in der Sicherheitstechnik erweist sich dieser Umstand als äusserst nachteilig, da solche Detektoren keine Schutzwirkung im Nahbereich von einigen Metern aufweisen und problemlos abgedeckt und unwirksam gemacht werden können speziell wenn es sich um passive Infrarotdetektoren handelt die die langwellige infrarote Eigenstrahlung von personen oder Objekten detektieren, da die dazu meistens verwendeten thermischen Sensoren für solche Signale zeitlich integrierend wirken.

Diesem nachteiligen Umstand wurde z.B. dadurch versucht zu begegnen, dass man eine Zwischenlösung zwischen der genannten Anordnung mit einem einzigen Sensor und der Anordnung mit Differentialsensor verwendet, d.h. eine Anordnung mit zwei Sensoren, von denen nach wie vor einer ein positives und der andere ein negatives Signal liefert, vor deren Summierung die Signale jedoch unterschiedlich gewichtet werden, was sich als Asymmetrie auswirkt. Ein solches System kommt aber zwangsläufig auch nur in den teilweisen Vorteil der erwähnten Störsicherheit, da es sich immer nur um einen Kompromiss zwischen den beiden erwähnten Anordnungen handeln kann.

Die Erfindung stellt sich die Aufgabe, die erwähnten Nachteile des Standes der Technik zu beseitigen und insbesondere eine Strahlungsdetektor- Anordnung zu schaffen, die eine gleichmässige und hohe Empfindlichkeit in allen Sichtfeldern und bei jeder Distanz aufweist und trotzdem eine hohe Unempfindlichkeit gegenüber Störstrahlungen besitzt.

Erfindungsgemäss wird diese Aufgabe gemäß dem Kennzeichnungsteil des Anspruchs 1, dadurch gelöst, dass die einzelnen Paare von einander zugeordneten Sichtfeldern eine unterschiedliche Strahlungsempfindlichkeit in dem einen Sichtfeld für das eine Sensorelement im Vergleich zu dem anderen Sichtfeld für das andere Sensorelement aufweisen.

Da die Einzelempfindlichkeiten dabei auf die Sichtfelder unterschiedlich aufgeteilt werden, bleibt die Empfindlichkeit auf sich bewegende Personen oder Objekte im Nahbereich uneingeschränkt erhalten.

Gemäss einer zweckmässigen Weiterbildung der Erfindung kann eine unterschiedliche Empfindlichkeitsverteilung dadurch erreicht werden, dass eine Blende zwischen benachbarten Sensorelementen vrogesehen wird, die aus strahlungsabsorbierendem oder wenigstens teilweise reflektierendem Material ausgeführt sein kann oder durch eine Blechlamelle oder einen Kunststoffring gebildet sein kann, dass die Sensoren gegeneinander geneigt sind oder dass sie wenigstens annähernd nur Strahlung aus je einem Halbraum erhalten.

Die Erfindung wird anhand der in den Figuren 7-11 dargestellten Ausführungsbeispiele näher erläutert. Es zeigen :

Figur 7 eine erfindungsgemässe Strahlungsdetektor-Anordnung mit einer Blende zwischen beiden Sensorelementen,

Figur 8 das zeitliche Integral des Ausgangssignales der Strahlungsdetektor-Anordnung nach Figur 7,

Figur 9 eine Strahlungsdetektor-Anordnung mit zwei gegeneinander geneigten Sensorelementen,

Figur 10 eine weitere Strahlungsdetektor-Anordnung mit zwei Sensorelementen und Reflektoren,

Figur 11 einen Einbruchdetektor mit erfindungsgemässem Strahlungsdetektor und Segmantspiegel.

Figur 7 zeigt eine erfindungsgemässe Strahlungsdetektor-Anordnung mit mehreren Linsen 5 und zwei in einem Gehäuse 10 mit einem Fenster 70 angeordneten Sensorelementen 62 und 63, die an die Eingänge 81 und 82 einer Differenz-Schaltung 85 angeschlossen sind. Dabei ist zwischen die Sensorelemente 62 und 63 senkrecht zur Ebene der Sensoren eine Blende 100 eingefügt. Diese Blende kann aus einem absorbierenden, teilweise oder vollständig reflektierenden, oder halbdurchlässigen Material hergestellt sein, und sie bewirkt, dass das Sensorelement 62 bevorzugt Strahlung aus dem Halbraum 110 empfängt, und das Sensorelement 63 aus dem Halbraum 111. Von Störstrahlung jedoch, die gleichmässig aus dem ganzen Raum auf die Strahlungsdetektor-Anordnung einwirkt, erhalten beide Sensorelemente infolge der Symmetrie der Anordnung weitgehend gleiche Anteile, die sich durch die Differenzbildung im Verstärker 85 gegenseitig aufheben und daher nicht wirksam werden können. Infolge der höheren Empfindlichkeit des Sensorelements 62 im Halbraum 110 sind auch die dem Sensorelement 62 zugeordneten Sichtfelder 24a und 25a emp– findlicher als die dem Sensorelement 63 zugeord– neten Sichtfelder 24b und 25b. Entsprechend sind im anderen Halbraum 111 die Sichtfelder 27b und 28b, die dem Sensorelement 63 zugeordnet sind, empfindlicher als die dem Sensorelement 62 zugeordneten Sichtfelder 27a und 28a. Nur die Sichtfelder 26a und 26b haben infolge der symmetrischen Anordnung zur Blende 100 die gleiche Empfindlichkeit.

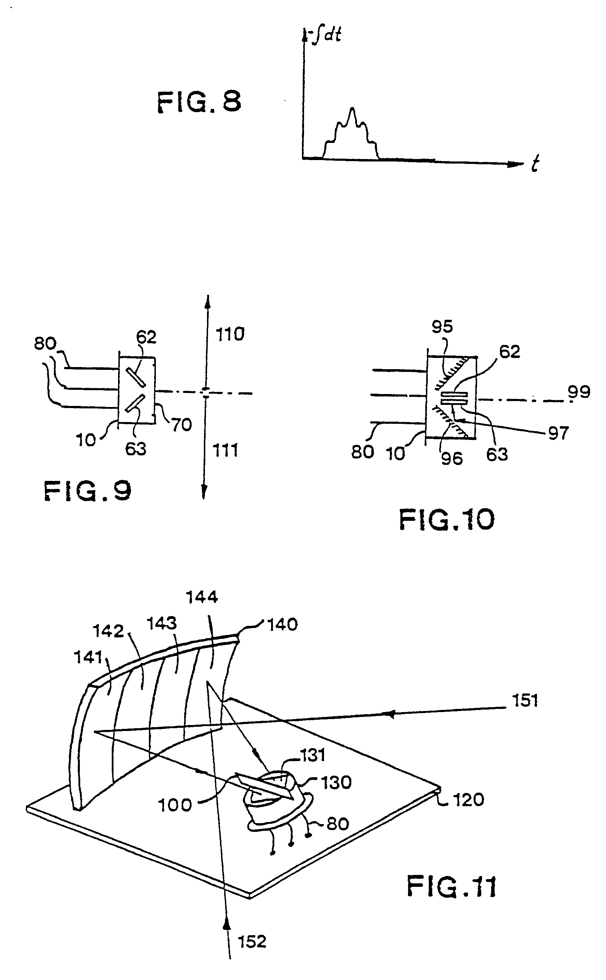

Figur 8 zeigt das zeitliche integral des Signales 86 beim Durchgang des Objektes 90 durch die Sichtfelder auf dem Pfad 91 in Figur 7, wobei das Signal wiederum durch Summierung des vom Sensorelement 62 gelieferten Signales 81 mit positivem Vorzeichen und des vom Sensorelement 63 gelieferten Signales 82 mit negativem Vorzeichen gebildet wird. Infolge der ungleichen Empfindlichkeit der einzelnen Sichtfelder überwiegen jedoch zuerst die positiven Beiträge zum integral und später die negativen Beiträge, oder umgekehrt, was zu einem nennenswerten, zur Alarmsignalgabe ausnutsbaren Momentanwert des Integrals führt. Der für die Störsicherheit wichtige Endwert Null wird jedoch trotzdem durch die erwähnte gleichmässige Einwirkung der Störstrahlung auf beide Sensorelemente gewährleistet.

Die in der Anordnung nach Figur 7 verwendete Blende 100 ist je nach Qualitätsanforderungen mehr oder weniger symmetrisch zwischen den Sensorelementen angeordnet, und sie kann sich über eine beliebige Länge und Breite ausdehnen. Je nach Grösse und Lage der Blende werden die Empfindlichkeiten der Sichtfelder beeinflusst und können den Bedürfnissen der Praxis angepasst werden. Die Blende 100 kann sich innerhalb oder ausserhalb des Sensorgehäuses 10 befinden oder beides. Sie kann auch bewusst eine leicht asymmetrische Position zwischen den Sensorelementen einnehmen. Die beste Wirkung wird jedoch immer dann erzielt, wenn beide Sensorelemente gleich grosse Anteile einer Störstrahlung erhalten. Des weiteren lässt sich die Blende auch in Anordnungen mit mehr als zwei Sensorelementen oder mit mehreren Sensorelement-Paaren anwenden, und gegebenenfalls können mehrere Blenden vorgesehen sein.

Figur 9 zeigt eine andere mögliche Anordnung der Sensorelemente 62 und 63, die im gezeigten Querschnitt schräg zueinander gestellt sind, wobei wie im Fall der Verwendung einer Blende das Sensorelement 62 eine grössere Empfindlichkeit für Strahlung aus dem einen Halbraum 110 aufweist und das Sensorelement 63 eine grössere Empfindlichkeit für Strahlung aus dem Halbraum 111, wobei wiederum bei gleichmässiger Störstrahlung aus dem gesamten Raum in beiden Sensorelement ungefähr gleiche Signale entstehen. Die Anordnung ist wiederum in einem Schutzgehäuse 10 eingebaut, das ein Fenster 70 aufweist, sowie Anschlussdrähte 80. Die Summierung der Signale mit umgekehrtem Vorzeichen kann auch hier im Gehäuse 10 selbst oder ausserhalb durch geeignete Massnhamen erfolgen.

Figur 10 zeigt eine weitere vorteilhafte Strahlungsdetektor-Anordnung. Die gleiche Funktion wie im vorangegangenen Beispiel wird hier erreicht, indem die Sensorelemente 62 und 63 ungefähr parallel zueinander und senkrecht zu der in Figur 7 gezeigten Position stehen. Im weiteren sind hier Spiegel 95 und 96 vorgesehen die ebenso wie die Blende oder die Schrägstellung der Sensorelemente eine einseitige Empfindlichkeit der Sensorelemente bezüglich der Symmetrie-Achse 99 erzeugen und dabei den Vorteil haben können, Empfindlichkeitsverluste, die durch Abdeckung enstehen können, zu vermeiden. Ein möglicher, durch den Spiegel 96 umgelenkter Strahlengang 97 ist in der Figur wiedergegeben. Auch solche Spiegel, die plan oder gewölbt sein können, lassen sich innerhalb oder ausserdhalb des Gehäuses 10 anordnen.

Figur 11 zeigt eine zweckmässige praktische Anordnung einer Blende 100 in einem passiven Infrarotdetektor, der als Bewegungsmelder zur Einbruchsicherung Verwendung findet. Das gezeigte Ausführungsbeispiel verwendet zur Erzeugung der Sichtfelder einen Segmentspiegel 140, der aus mehreren nebeneinandergereihten oder zusammengebauten Spiegelsegmenten 141 bis 144 besteht und die Strahlung aus verschiedenen Richtungen auf die im Gehäuse 130 eingebaute differentiell arbeitenden Sensoren lenken. Diese beiden Sensoren können beispielsweise in Form eines handelsüblichen pyroelektrischen Differentialsensors ausgeführt sein. Sowohl der Segmentspiegel 140, wie das Sensorgehäuse 130 mit den Anschlüssen 80 sind auf der Schaltungsplatte 120 montiert, die auch für die Weiterverarbeitung der Signale nötige Komponenten enthalten kann. Die ganze Anordnung ist sodann meist in einem weiteren Schutzgehäuse mit passendem Blickwinkel untergebracht. In dem hier gezeigten Beispiel wird die Blende dadurch gebildet, dass ein Streifen 100, der z.B. aus Blech bestehen kann, vor dem Sichtfenster 131 des Sensorgehäuses 130 angeordnet ist und wenigstens annähernd senkrecht zum Sichtfenster 131 steht. Dadurch können beispielsweise die Strahlen 151 und 152 nur einseitig auf die Sensorelemente einwirken und die gewünschte Asymmetrie ist damit erreicht. Zudem hat die gezeigte Anordnung den Vorteil, dass die Blende 100 nachträglich in bestehende Gehäuse eingebaut werden kann. Wenn auch Blenden aus reflektierendem Material, wie Blech, Folie oder verspiegeltem Kunststoff die besten Resultate bringen, lassen sich je nach Anforderungen auch Plättchen, Stege, Drähte aus den verschiedenartigsten absorbierenden, teilweise durchlässigen oder teilweise reflektierenden Materialien, wie Papier, Kunststoff oder Metall etc. verwenden.

Es sei bemerkt, dass die erfindungsgemässe Erzeugung einer asymmetrischen Empfindlichkeit der Sensorelemente nicht unbedingt in Zusammenhang steht mit der Art der Erzeugung der Sichtfelder und im Prinzip auch nicht von der Art der Summierung der Sensorsignale abhängt.

### Ansprüche

1. Strahlungsdetektor mit mindestens einem Paar von Sensorelementen (62, 63) und einer durch einen Segmentspiegel (140) oder mehrere Sammellinsen (5) gebildeten Anordnung optischer Elemente (5, 140), welche-über den gesamten Raumwinkel betrachtet-die Strahlung aus mehreren Paaren von sich nicht oder sich nur teilweise, nämlich im Nahbereich, überdeckenden Sichtfeldern (22, 23) auf die Sensorelemente (62, 63) lenken, wobei jeweils ein Sichtfeld (22), aus dem eines (62) der Sensorelemente Strahlung empfängt, einem anderen Sichtfeld (23) zugeordnet ist, aus welchem das andere Sensorelement (63) Strahlung mittels des gleichen optischen Elementes empfängt, und wobei die von den beiden Sensorelementen (62, 63) mit unterschiedlichem (positivem bzw. negativem) Vorzeichen gelieferten Ausgangssignale so summiert werden, daß sie sich bei gleichmäßiger Bestrahlung der Sensorelemente wenigstens angenähert gegenseitig aufheben, **dadurch gekennzeichnet,** daß die einzelnen Paare von einander zugeordneten Sichtfeldern (24a, 24b; 25a, 25b; ... 28a, 28b) eine unterschiedliche Strahlungsempfindlichkeit in dem einen Sichtfeld (24a, 25a... 28a) für das eine Sensorelement (62) im Vergleich zu dem anderen Sichtfeld (24b, 25b... 28b) für das andere Sensorelement (63) aufweisen, so daß beim Durchgang eines Objektes (90) durch die Sichtfelder zunächst die positiven Beiträge zum Integral und dann die negativen Beiträge zum Integral (oder umgekehrt) überwiegen und sich dadurch einerseits ein zur Alarmsignalgabe ausnutzbarer Momentanwert des Integrals ergibt, während andererseits der Endwert des Integrals Null beträgt (Fig.8).

2. Strahlungsdetektor nach Anspruch 1, dadurch gekennzeichnet, dass zur Erzeugung einer unterschiedlichen Strahlungsempfindlichkeit in einander zugeordneten Sichtfeldern eine Blende (100) zwischen den Sensorelementen (62, 63) vorgesehen ist.

3. Strahlungsdetektor nach Anspruch 2, dadurch gekennzeichnet, dass die Blende (100) durch einen Körper aus wenigstens teilweise strahlungsabsorbierendem Materials gebildet ist.

4. Strahlungsdetektor nach Anspruch 2, dadurch gekennzeichnet, dass die Blende (100) aus wenigstens teilweise reflektierendem Material besteht.

5. Strahlungsdetektor nach Anspruch 2, dadurch gekennzeichnet, dass die Blende (100) durch eine vor das Sensorgehäuse (10) vorgesetzte Blechlamelle gebildet ist.

6. Strahlungsdetektor nach Anspruch 2, dadurch gekennzeichnet, dass die Blende (100) durch einen vor das Sensorgehäuse (10) vorgesetzten Kunststoffsteg gebildet ist.

7. Strahlungsdetektor nach Anspruch 1, dadurch gekennzeichnet, dass zur Erzeugung einer unterschiedlichen Strahlungsempfindlichkeit in einander zugeordneten Sichtfeldern die einzelnen Sensorelemente (62, 63) gegeneinander geneigt angeordnet sind.

8. Strahlungsdetektor nach einem der Ansprüche 1-7, dadurch gekennzeichnet, dass die beiden Sensorelemente (62, 63) wenigstens vorzugsweise nur Strahlung aus unterschiedlichen Halbräumen (110, 111) empfangen.

9. Strahlungsdetektor nach einem der Ansprüche 1-8, dadurch gekennzeichnet, dass wenigstens teilweise reflektierende Spiegel (95, 96) in der Nähe der Sensorelemente (62, 63) vorgesehen sind.

10. Verwendung des Strahlungsdetektors nach einem der Ansprüche 1-9 zur Einbruchsicherung, dadurch gekennzeichnet, dass die Sensorelemente die Infrarot-Eisetzfehlergenstrahlung einer in den Sichtfeldern befindlichen Person detektieren.

### Claims

1. Radiation detector with at least one pair of sensor elements (62, 63) and an arrangement of optical elements (5,.140) formed by a segmented mirror (140) or a plurality of condensing lenses (5), which, considered across the space, deflect radiation from a number of pairs of fields of view (22, 23) onto the sensor elements (62, 63), wherein said fields of view are not overlapping or only partially, namely in an area close to the radiation detector, wherein each field of view (22) from which one of the sensor elements (62) is receiving radiation corresponds to another field of view (23) from which the other sensor element (63) is receiving radiation by means of the same optical element, and wherein the output signals of opposite signs (positive and negative) delivered by the two sensor elements (62, 63) are summed up in such a way that they are counterbalancing each other at least approximately when the sensor elements are receiving an equal amount of radiation, characterized in that, in the pairs of fields of view corresponding to each other (24a, 24b ; 25a, 25b ; ... 28a, 28b), the radiation sensitivity in one of the fields of view (24a, 25a,...28a) related to one of the sensor elements (62) is different from radiation sensitivity in the other field of view (24b, 25b,...28b) related to the other sensing element (63), such that upon the crossing of an object through the fields of view, the positive contributions to the integral prevail first and then the negative contributions to the integral (or vice versa) in such a manner that the magnitude of the momentary value of the integral is sufficiently high to be useful to activate an alarm output signal, whereas the end value of the integral is zero (Fig.8).

2. Radiation detector according to claim 1, characterized in that, for generation a different radiation sensitivity in fields of view corresponding to each other, a shield (100) is disposed between the sensor elements (62, 63).

3. Radiation detector according to claim 2, characterized in that the shield (100) is formed by a body of at least partially radiation absorbing material.

4. Radiation detector according to claim 2, characterized in that the shield (100) consists of an at least partially reflecting material.

5. Radiation detector according to claim 2, characterized in that the shield (100) is formed by a sheet-metal arranged in front of the sensor housing (100).

6. Radiation detector according to claim 2, characterized in that the shield (100) is formed by a plastic rib arranged in front of the sensor housing (10).

7. Radiation detector according to claim 1, characterized in that, for generating a different radiation sensitivity in fields of view corresponding to each other, the respective sensor elements (62, 63) are inclined to each other.

8. Radiation detector according to one of claims 1-7, characterized in that both sensor elements (62, 63) are at least preferably receiving only radiation from a different halt of the space (110, 111).

9. Radiation detector according to one of claims 1-8, characterized in that at least partially reflective minors (95, 96) are disposed in the vicinity of the sensor elements (62, 63).

10. Use of the radiation detector according to one of claims 1-9 for intrusion protection, characterized in that the sensor elements are detecting the inherent infrared radiation of a person present in one of the fields of view.

## Revendications

1. Détecteur de rayonnement avec au moins une paire d'éléments sensibles (62, 63) avec un miroir ségmenté (140) ou plusieurs lentilles convergentes formant un arrangement d'éléments optiques (5, 140) qui, considérant l'entité de l'espace, dirigent un rayonnement émanant de plusieurs paires de zones de réception (22, 23) qui ne coïncident pas ou que partiellement a proximité du détecteur, sur les éléments sensibles (62, 63), de manière à ce que chaque zone de réception (22) de laquelle un des éléments sensibles (62) reçoit un rayonnement est coordonnée à une autre zone de réception (23) de laquelle l'autre élément sensible (63) reçoit un rayonnement au moyen du même élément optique, où les signaux sortants étant de signes opposés (positifs ou négatifs), délivrés par les éléments sensibles (62, 63) sont additionnés de manière à ce qu'ils s'annulent au moins approximativement si les éléments sensibles sont soumis à un rayonnement symétrique, caractérisé par le fait que les paires de zones de réception coordonnées mutuellement (24a, 24b ; 25a, 25b ;... 28a, 28b) présentent une sensibilité au rayonnement différente dans l'une des zones de réception (24a, 25a,... 28a) appartenant à un des éléments sensibles (62) comparé à l'autre zone de réception (24b, 25b,... 28b) appartenant à l'autre élément sensible (63), de manière à ce qu'au passage d'un objet (90) par les zones de réception, d'abord les contributions positives à l'intégral et puis les contributions négatives à l'intégral (ou vice-versa) dominent, provoquant d'une part une amplitude momentanée de l'intégral pouvant être utilisée pour l'activation d'un alarme, pendant que d'autre part, la valeur finale de l'intégral est de zéro (Fig. 8).

2. Détecteur selon la revendication 1, caractérisé par le fait qu'un écran (100) est prévu entre les éléments sensibles (62, 63) pour obtenir une sensibilité du rayonnement differente dans les zones de réception coordonnées mutuellement.

3. Détecteur selon la revendication 2, caractérisé par le fait que l'écran (100) est constitué par un corps en matériau absorbant au moins en partie le rayonnement.

4. Détecteur selon la revendication 2, caractérisé par le fait que l'écran (100) est constitué en matériau réfléchissant au moins en partie le rayonnement.

5. Détecteur selon la revendication 2, caracté risé par le fait que l'écran (100) est formé par une lamelle en métal fixée devant le boîtier (10) des éléments sensibles.

6. Détecteur selon la revendication 2, caracté risé par le fait que l'écran (100) est formé par une barrière en matière synthétique fixée devant le boîtier (10) des éléments sensibles.

7. Détecteur selon la revendication 1, caractérisé par le fait que les éléments sensibles (62, 63) sont inclinés l'un contre l'autre pour obtenir une sensibilité au rayonnement différente dans les zones de réception coordonnées mutuellement.

8. Détecteur selon une des revendications 1-7, caractérisé par le fait que (es deux éléments sensibles (62, 63) ne captent de préférence que le rayonnement d'un demi-espace (110, 111) différent.

9. Détecteur selon une des revendications 1-8, caractérisé par le fait que des mirroirs (95, 96) au moins partiellement réfléchissants sont prévus au voisinage des éléments sensibles (62, 63).

10. Utilisation du détecteur selon une des revendications 1-9 pour la sécurité contre les effractions, caractérisé par le fait que les éléments sensibles détectent le rayonnement infrarouge d'une personne se trouvant dans les zones de réception.

FIG.1

FIG.2

FIG.3

FIG.4

FIG.5

FIG.6

FIG.7

FIG.8

FIG.9

FIG.10

FIG.11